# EUROPEAN PATENT APPLICATION

(11) **EP 2 667 628 A2**
(43) Date of publication of application: **27.11.2013**
(21) Application number: 13162239.1
(22) Date of filing: 04.04.2013
(51) Int. Cl.: H04N 21/431, H04N 21/422

(54) **Remote-controllable electronic apparatus**

(30) Priority: 22.05.2012 JP 2012116170
(71) Applicant: Funai Electric Co., Ltd., Daito-shi, Osaka 574-0013 (JP)
(72) Inventor: Koizumi, Arihiro, Daito-shi, Osaka 574-0013 (JP)
(74) Representative: Grünecker, Kinkeldey, Stockmair & Schwanhäusser

(57) **Abstract**

This remote-controllable electronic apparatus (100) includes a remote controller (60) including a first operation button (61, 62), a display portion (11) displaying a picture, and a control portion (27) performing control of displaying a remote controller image (70) including a plurality of second operation button images (75) operable with the first operation button on the display portion , and is configured to be capable of accepting a device operation through the remote controller via the remote controller image. In this remote-controllable electronic apparatus, the first operation button of the remote controller is smaller in number than the second operation button images of the remote controller image.

## Description

### BACKGROUND OF THE INVENTION

### Field of the Invention

The present invention relates to a remote-controllable electronic apparatus, and more particularly, it relates to a remote-controllable electronic apparatus including a remote controller and a display portion displaying a remote controller image.

### Description of the Background Art

A remote-controllable electronic, apparatus including a remote controller and a display portion displaying a remote controller image is known in general, as disclosed in Japanese Patent Laying-Open No. 2007-058569, for example.

Japanese Patent Laying-Open No. 2007-058569 discloses an electronic apparatus such as a television apparatus including a display portion and operated by a remote controller having a plurality of operation buttons. This electronic apparatus is configured to display a remote controller image faithfully simulating the entire remote controller including the operation buttons on the display portion and reflect operation content in an operation button image corresponding to a pressed operation button when a user presses (presses down) the operation button of the remote controller at hand. Thus, the user can perform a prescribed device operation on the electronic apparatus by operating the remote controller at hand while viewing the remote controller image on the display portion.

Although the conventional electronic apparatus disclosed in Japanese Patent Laying-Open No. 2007-058569 displays the remote controller image faithfully simulating the entire remote controller on the display portion, it is necessary for the user to operate the operation buttons (press the operation buttons), viewing the remote controller at hand each time and checking the operation buttons individually. Therefore, if the functions of the electronic apparatus and the operation buttons of the remote controller increase in number, it is necessary for the user to hunt for exactly a right operation button at hand, and hence the operability of the remote controller is disadvantageously reduced.

### SUMMARY OF THE INVENTION

The present invention has been proposed in order to solve the aforementioned problem, and an object of the present invention is to improve the operability of a remote controller with respect to a remote-controllable electronic apparatus.

A remote-controllable electronic apparatus according to an aspect of the present invention includes a remote controller including a first operation button, a display portion displaying a picture, and a control portion performing control of displaying a remote controller image including a plurality of second operation button images operable with the first operation button on the display portion, is configured to be capable of accepting a device operation through the remote controller via the remote controller image, and is configured such that the first operation button of the remote controller is smaller in number than the second operation button images of the remote controller image.

As hereinabove described, the remote-controllable electronic apparatus according to the aspect of the present invention is configured to be capable of accepting the device operation through the remote controller via the remote controller image and is configured such that the first operation button of the remote controller is smaller in number than the second operation button images of the remote controller image, whereby a user can perform various device operations on the electronic apparatus through the remote controller having the operation button fewer than the number of the operation buttons of the remote controller image displayed on the display portion. Thus, the operability of the remote controller can be improved also when the user performs the device operation through the remote controller via the remote controller image. Furthermore, the first operation button is reduced in number, so that the remote controller can be downsized while the structure of the remote controller is simplified.

In the aforementioned remote-controllable electronic apparatus according to the aspect, the first operation button of the remote controller is preferably constituted by a selection button capable of moving a selection between the plurality of second operation button images in the remote controller image to select the second operation button images individually and a decision button deciding execution of a device operation corresponding to a selected second operation button image of the second operation button images. According to this structure, the operation content of the remote controller for performing a prescribed device operation can be limited to only two types of operations of finding an appropriate second operation button image in the remote controller image with the selection button and executing the actual device operation corresponding to the second operation button image selected with the decision button. Consequently, it is not necessary to perform operations other than the two types of operations, and hence the operability of the remote controller can be significantly improved.

In the aforementioned structure having the first operation button constituted by the selection button and the decision button, the selection button is preferably a key capable of longitudinally and laterally moving the selection between the second operation button images in the remote controller image, and the remote-controllable electronic apparatus is preferably configured such that the device operation through the remote controller is completed on the basis of pressing down of the decision button with respect to the second operation button image selected by the key. According to this structure, an operation of finding an appropriate second operation button image in the remote controller image with the aforementioned key is easily performed, and one device operation can be completed on the basis of pressing down of the decision button with respect to the selected second operation button image. In other words, one device operation is performed by a simple combination of the operation of this key and an operation of pressing down the decision button, and hence the easy-to-use remote controller for a user who is not used to a remote control operation can be provided.

In this case, the key constituting the selection button is preferably arranged in a cross shape. According to this structure, an operation of moving a selection longitudinally and laterally with the key arranged in a cross shape to find an appropriate second operation button image in the remote controller image can be smoothly performed. The "key arranged in a cross shape" according to the present invention includes a key constituted by four separate selection buttons (operation keys) of upward, downward, leftward, and rightward keys and a key constituted by one operation key member having four selection buttons integrally formed and moving a selection longitudinally and laterally by tilting this integrally operation key member in upward, downward, leftward, and rightward directions.

In the aforementioned structure having the first operation button constituted by the selection button and the decision button, the control portion is preferably configured to perform control of terminating display of the remote controller image on the display portion on the basis of that the decision button has been pressed down. According to this structure, the remote controller image is quickly deleted from the display portion after the user presses down the decision button to execute a prescribed device operation on the electronic apparatus, and hence the user can view the picture comfortably. Furthermore, the remote controller image is deleted, so that the user can easily recognize that the prescribed device operation has been executed.

In this case, the control portion is preferably configured to perform control of terminating the display of the remote controller image on the display portion after the device operation corresponding to the selected second operation button image is executed by pressing down the decision button and the display of the remote controller image on the display portion continues for a prescribed time period. According to this structure, there is a high possibility that the user performs a device operation via the remote controller image again immediately after pressing down the decision button, and hence the remote controller image continues to be displayed on the display portion for the prescribed time period after the decision button is pressed down, whereby the user can easily continue a device operation via the remote controller image continuing to be displayed also when the user repeats a device operation via the remote controller image once displayed.

In the aforementioned remote-controllable electronic apparatus according to the aspect, the control portion is preferably configured to perform control of shifting to a state of displaying the remote controller image on the display portion and being capable of accepting the device operation through the remote controller on the basis of that the first operation button of the remote controller has been pressed down. According to this structure, the remote controller image can be displayed on the display portion, effectively utilizing the first operation button limited in number when the device operation through the remote controller is started.

In this case, the remote-controllable electronic apparatus is preferably configured to store the most recently selected second operation button image of the second operation button images in the remote controller image, and the control portion is preferably configured to perform control of displaying the remote controller image on the display portion such that a device operation on the most recently selected second operation button image can be preferentially accepted when the remote controller image is displayed on the display portion on the basis of that the first operation button of the remote controller has been pressed down. According to this structure, there may be a high possibility that the user repeats a device operation on the second operation button image last used in the previous (most recent) device operation of the remote controller image when the user performs a device operation again for some reason, and hence in this case, the device operation on the last selected second operation button image can be preferentially accepted, so that the device operation through the remote controller via the remote controller image can be promptly performed.

In the aforementioned remote-controllable electronic apparatus according to the aspect, the control portion is preferably configured to perform control of displaying the remote controller image on a region of the display portion where the amount of picture motion is relatively small. According to this structure, the user can execute a device operation without interrupting picture viewing as much as possible when performing the device operation via the remote controller image.

In this case, the control portion is preferably configured to perform control of displaying the remote controller image on a region where the colors of pixels constituting the picture change relatively slightly. According to this structure, the remote controller image can be easily displayed on the region of the display portion where the amount of picture motion is relatively small.

In the aforementioned structure having the control portion performing control of displaying the remote controller image on the region where the amount of picture motion is relatively small, the control portion is preferably configured to perform control of moving the display position of the remote controller image such that the remote controller image is displayed in the region of the display portion where the amount of picture motion is relatively small, transitioning following transition of the picture. According to this structure, the remote controller image can be constantly displayed in a region where picture viewing is not interrupted as much as possible also when picture content transitions with time, and hence the user can perform a device operation while continuously maintaining comfortable picture-viewing.

In the aforementioned structure having the control portion performing control of displaying the remote controller image on the region where the amount of picture motion is relatively small, the control portion is preferably configured to perform control of turning the remote controller image around and displaying the remote controller image on the display portion such that the remote controller image falls within the region of the display portion where the amount of picture motion is relatively small according to the shape of the region. According to this structure, display of the remote controller image in a state where the remote controller image goes beyond the region of the display portion where the amount of picture motion is relatively small into a region where the amount of picture motion is relatively large can be suppressed, and hence a device operation can be executed without losing comfortable picture-viewing.

In the aforementioned structure having the control portion performing control of displaying the remote controller image on the region where the amount of picture motion is relatively small, the control portion is preferably configured to perform control of adjusting the scale of the remote controller image and displaying the remote controller image on the display portion such that the remote controller image falls within the region of the display portion where the amount of picture motion is relatively small according to the shape of the region. According to this structure, the display of the remote controller image in the state where the remote controller image goes beyond the region of the display portion where the amount of picture motion is relatively small into the region where the amount of picture motion is relatively large can be easily suppressed, and hence a device operation can be executed without losing comfortable picture-viewing.

In the aforementioned remote-controllable electronic apparatus according to the aspect, the control portion is preferably configured to perform control of displaying a second operation button image available for a device operation of the plurality of second operation button images included in the remote controller image on the display portion according to the operation content of the remote-controllable electronic apparatus such that the second operation button image is operable with the first operation button. According to this structure, the user can operate only the second operation button image available for a device operation with the remote controller, and hence states where device operations unavailable for the electronic apparatus are performed can be easily eliminated.

The aforementioned remote-controllable electronic apparatus according to the aspect is preferably configured to be connectable with an external device, the control portion is preferably configured to perform control of displaying the remote controller image corresponding to the external device on the display portion when the external device is connected, and the remote-controllable electronic apparatus is preferably configured to be capable of accepting a device operation on the external device via the remote controller image corresponding to the connected external device through the remote controller. According to this structure, a device operation on the external device connected to this electronic apparatus can be performed with the remote controller according to the present invention having a simplified structure. In other words, the remote controller according to the present invention can be commonly employed for a plurality of operation target devices, and hence the convenience of the user can be improved.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 illustrates a state where a device operation is performed through a remote controller in a television apparatus according to an embodiment of the present invention;
Fig. 2 is a block diagram showing the control structure of the television apparatus according to the embodiment of the present invention;
Fig. 3 illustrates a remote controller image displayed on a display portion of the television apparatus according to the embodiment of the present invention;
Fig. 4 illustrates a remote controller image displayed on the display portion when a DVD player is operated in the television apparatus according to the embodiment of the present invention;
Fig. 5 illustrates a mode (display example 1) of displaying the remote controller image on the display portion of the television apparatus according to the embodiment of the present invention;
Fig. 6 illustrates a mode (display example 2) of displaying the remote controller image on the display portion of the television apparatus according to the embodiment of the present invention; and
Fig. 7 illustrates a flow of processing performed by a control portion when a device operation is performed through the remote controller in the television apparatus according to the embodiment of the present invention.

### DESCRIPTION OF THE PREFERRED EMBODIMENT

An embodiment of the present invention is now described with reference to the drawings.

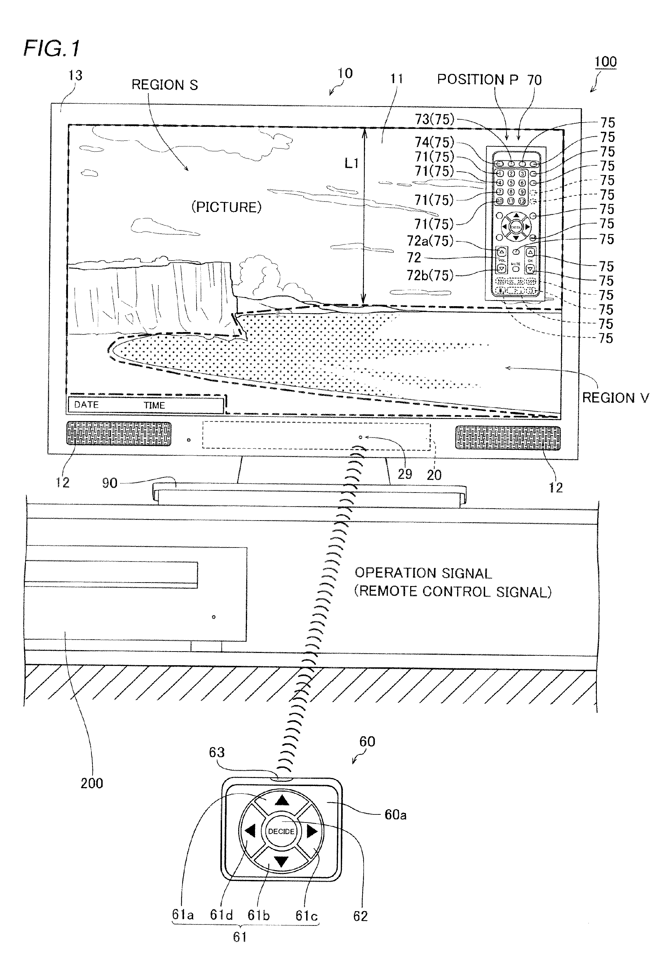

First, the structure of a television apparatus 100 according to the embodiment of the present invention is described with reference to Figs. 1 to 6. The television apparatus 100 is an example of the "remote-controllable electronic apparatus" in the present invention.

The television apparatus 100 according to the embodiment of the present invention includes an apparatus body 10 and a stand 90 supporting the apparatus body 10 from below, as shown in Fig. 1. The apparatus body 10 includes a display portion (liquid crystal display) 11 displaying a video picture including a still image and a moving image and a pair of speaker portions 12 arranged below the display portion 11. The television apparatus 100 further includes a remote controller 60 and is configured such that a user can perform a device operation (remote control operation) on the apparatus body 10 from a distant position.

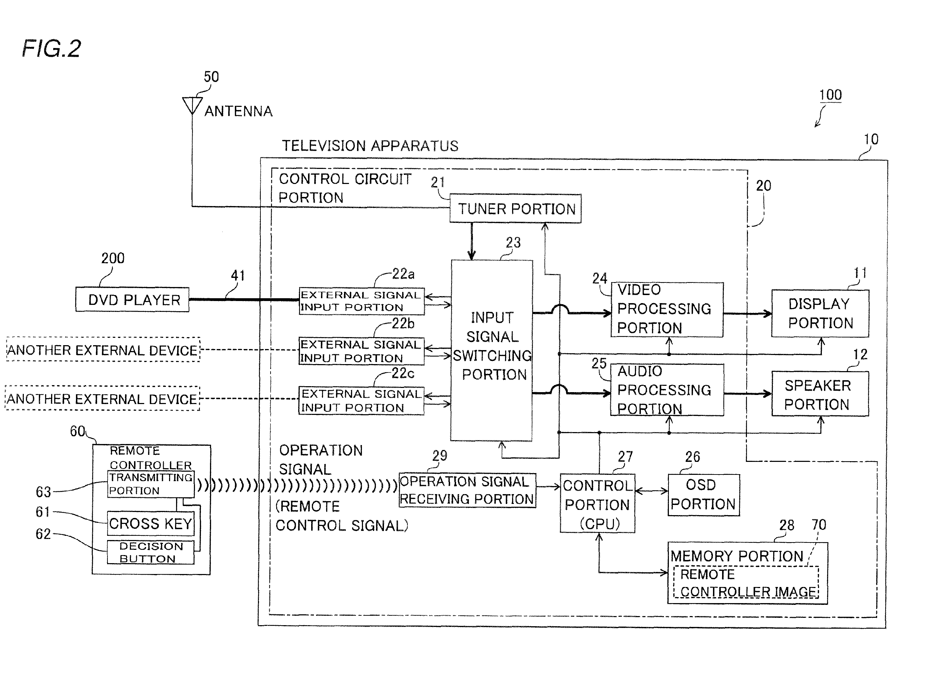

The apparatus body 10 includes a control circuit portion 20 (shown by a one-dot chain line) arranged inside a housing 13 (see Fig. 1) holding the display portion 11, as shown in Fig. 2. The control circuit portion 20 includes has a tuner portion 21 receiving a television broadcast wave through an antenna 50, external signal input portions 22a to 22c each connected with an external device through a connection cable 41 corresponding to the HDMI standard, an input signal switching portion 23 capable of switching an input source of a signal between the tuner portion 21 and the external device connected to any of the external signal input portions 22a to 22c, a video processing portion 24 processing a video signal from the input signal switching portion 23, an audio processing portion 25 processing an audio signal from the input signal switching portion 23, and an OSD portion 26 adding on-screen information to the video signal and outputting the same to the display portion 11. In Fig. 2, a DVD player 200 is connected as the external device to the external signal input portion 22a through the connection cable 41. The DVD player 200 is an example of the "external device" in the present invention.

The input signal switching portion 23 has a function of transmitting an input signal from the tuner portion 21 or the DVD player 200 or the like connected to the external signal input portion 22a to the video processing portion 24 and the audio processing portion 25. The video processing portion 24 has a function of performing various types of processing on the video signal transmitted from the input signal switching portion 23. Thus, the video signal is output to the display portion 11 after digital-analog (DA) conversion processing is performed in the video processing portion 24. The audio processing portion 25 has a function of performing various types of processing on the audio signal transmitted from the input signal switching portion 23. Thus, the audio signal is output from the speaker portions 12 after DA conversion processing is performed in the audio processing portion 25. The on-screen information output from the OSD portion 26 to the display portion 11 on the basis of control of a control portion 27 described later includes image information or the like containing a prescribed design in addition to character information.

As shown in Fig. 2, the control circuit portion 20 has the control portion 27 including a CPU, a memory portion 28, and an operation signal receiving portion 29 receiving an operation signal (remote control signal) from the remote controller 60 in addition to the aforementioned components.

The control portion 27 has a function of controlling the apparatus body 10. The memory portion 28 unrewritably stores a control program or the like of the television apparatus 100 executed by the control portion 27. The memory portion 28 is provided with a working memory area temporarily storing a control parameter or the like used when the control program is executed. The operation signal received by the operation signal receiving portion 29 denotes an electrical signal into which an infrared signal (IR signal) that the user transmits with the remote controller 60 is converted.

According to this embodiment, the television apparatus 100 is configured to be capable of accepting a device operation through the remote controller 60 via a remote controller image 70 displayed on the display portion 11, as shown in Fig. 1. In other words, the television apparatus 100 is configured to display the remote controller image 70 on a prescribed position (position P, for example) of the display portion 11 on the basis of the control operation of the control portion 27 (see Fig. 2) when the user performs the device operation through the remote controller 60. The user operates the remote controller 60 at hand thereby virtually operating the remote controller image 70 in the display portion 11, whereby the user can operate a device operation on the television apparatus 100. This point is hereinafter described in detail.

Original image data (reference image data) to display the remote controller image 70 is previously stored in the memory portion 28 (see Fig. 2). The television apparatus 100 is configured such that the OSD portion 26 (see Fig. 2) outputs the remote controller image 70 to the display portion 11 (see Fig. 2) on the basis of a command of the control portion 27.

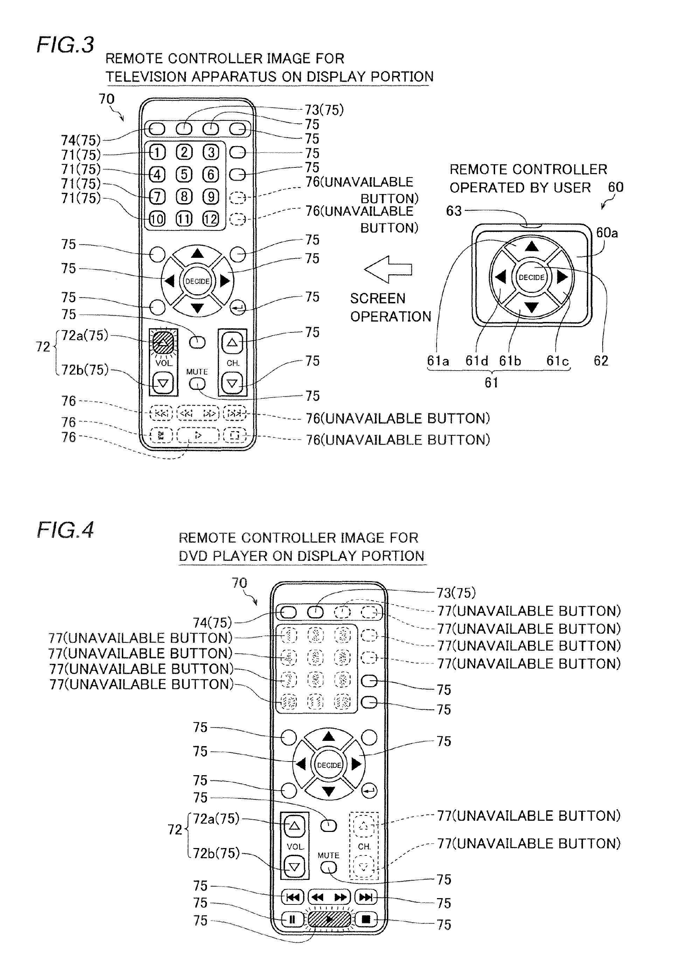

As shown in Fig. 3, the remote controller image 70 displayed on the display portion 11 (see Fig. 1) includes images of a plurality of operation buttons. For example, the remote controller image 70 includes images 71 of twelve channel buttons operated in selection (direct selection) of a viewing program, an image 72 of a volume button operated in adjustment of (turning up/down) volume, an image 73 of an audio switch button operated in switching between primary audio and secondary audio, an image 74 of an input switch button operated in switching of an operation target device of the remote controller 60 from the television apparatus 100 (see Fig. 1) to the external device such as the DVD player 200 (see Fig. 1), etc. The aforementioned exemplified various button images are described below as operation button images 75, except for special sections. The operation button images 75 are examples of the "second operation button images" in the present invention. In the remote controller image 70 shown in Figs. 1 and 3 to 6, all operation button images are not denoted by symbols for convenience of illustration, but operation button images not denoted by symbols are treated the same as the operation button images 75 denoted by symbols.

In contrast, the television apparatus 100 includes the remote controller 60 as a physical apparatus for virtually operating the remote controller image 70 displayed on the display portion 11, as shown in Fig. 1. The remote controller 60 is configured such that a cross key 61 including four selection buttons (an upward operation button 61a, a downward operation button 61b, a rightward operation button 61c, and a leftward operation button 61d) capable of moving a selection longitudinally and laterally and a decision button 62 arranged at a substantially central portion of the cross key 61 are arranged on an operation surface 60a. The remote controller 60 is provided with a transmitting portion 63 transmitting the operation signal (remote control signal). The cross key 61 and the decision button 62 are examples of the "first operation button" in the present invention. The cross key 61 is an example of the "key" in the present invention.

According to this embodiment, the number of (five in total) the operation buttons of the remote controller 60 is smaller than the number of (thirty-three in total excluding an unavailable button image described later) the operation button images 75 constituting the remote controller image 70, as shown in Fig. 3. Therefore, as a procedure for operating the remote controller image 70 with the remote controller 60, the user first moves a selection between the operation button images 75 in the remote controller image 70 to select an intended operation button image 75 while arbitrarily pressing down the operation buttons 61a to 61d of the cross key 61. Then, the user presses down the decision button 62 to decide execution of a device operation corresponding to the selected operation button image 75. If the user changes volume, for example, the user operates the cross key 61 to select an image 72a of a volume up button and presses down the decision button 62 when the image 72a of a volume up button is selected, as shown in Fig. 3. The television apparatus 100 is configured such that the volume output from the speaker portions 12 (see Fig. 1) is gradually increased according to the number of times the decision button 62 is pressed down. Thus, one device operation on the television apparatus 100 is completed by operating the cross key 61 and the decision button 62.

The television apparatus 100 is configured to display (blink) the currently selected operation button image 75 in a display color different from the display color of non-selected operation button images 75 when the user moves a selection between the operation button images 75 while arbitrarily pressing down the operation buttons 61a to 61d of the cross key 61, as described above. For example, it is preferable to change the display color of the currently selected operation button image 75 to bright red and blink the currently selected operation button image 75 whereas the display color of the non-elected operation button images 75 is gray. Thus, the user can visually check a state where the operation of the cross key 61 at hand is linked to the operation of the remote controller image 70. In addition, the currently selected operation button image 75 is displayed in a prominent state in the remote controller image 70, and hence the user is inhibited from losing sight of the operation content. Fig. 3 shows a state where the image 72a of a volume up button is selected to blink (blink in red), as an example of a display mode.

The television apparatus 100 is configured such that the user presses down the decision button 62 of the remote controller 60 in a state where the image 72a of a volume up button blinks in red to change the image 72a of a volume up button from the state of blinking in red to a state of lighting in blue. While the decision button 62 is continuously pressed down (is repeatedly hit) in the operation of the image 72a of a volume up button, the state of lighting in blue continues. Thus, a state where a device operation corresponding to the currently selected operation button image 75 (the image 72a of a volume up button) is actually performed is reflected to the remote controller image 70 by pressing down the decision button 62.

According to this embodiment, the aforementioned device operation through the remote controller 60 can be performed on not only the television apparatus 100 but also the external device such as the DVD player 200 (see Fig. 1) connected to the television apparatus 100. In other words, the television apparatus 100 and the DVD player 200 are connected to each other through the connection cable 41, as shown in Fig. 2, and hence a device operation on the DVD player 200 can be executed on the basis of a command of the control portion 27 when the operation target device is switched from the television apparatus 100 (apparatus body 10) to the DVD player 200.

Specifically, when the user selects and presses down the image 74 of an input switch button in the remote controller image 70 through the remote controller 60, the remote controller image 70 is switched to display content intended to perform subsequent device operations through the remote controller 60 on the DVD player 200 (see Fig. 1). In other words, a state where the remote controller image 70 including the operation button images 75 (thirty-three in total) available for only the television apparatus 100 is displayed, as shown in Fig. 3 transitions to a state where the remote controller image 70 including the operation button images 75 (twenty-four in total) available for only the DVD player 200, as shown in Fig. 4 is displayed, following pressing down of the image 74 of an input switch button. Also when the operation target device is the DVD player 200, the number of (five in total) the operation buttons of the remote controller 60 is smaller than the number of (twenty-four in total) the operation button images 75.

When the operation target device is the television apparatus 100, as shown in Fig. 3, a plurality of button images (unavailable buttons) 76 related to the reproduction operation of video content recorded in a DVD of the operation button images 75 are set to be diluted in display color (displayed in dilute gray) and incapable of being selected even if the cross key 61 is moved. On the other hands, when the operation target device is the DVD player 200, as shown in Fig. 4, button images (unavailable buttons) 77 related to channel selection of the operation button images 75 are set to be displayed in dilute gray and incapable of being selected through the cross key 61.

Thus, according to this embodiment, the television apparatus 100 is configured to display only the operation button images 75 available for device operations corresponding to the operation target device of a plurality of operation button images 75 included in the remote controller image 70 on the display portion 11 according to the operation content of the electronic apparatus (according to whether the operation target device is the television apparatus 100 or the DVD player 200) such that the user can operate only the operation button images 75 with the remote controller 60 (the cross key 61 and the decision button 62).

According to this embodiment, the television apparatus 100 is configured to start display of the remote controller image 70 on the display portion 11 when the user presses down the cross key 61 or the decision button 62 of the remote controller 60 once as shown in Fig. 1 in a state where only a picture is displayed on the display portion 11. In other words, the television apparatus 100 is configured to display the remote controller image 70 by pressing down the cross key 61 or the decision button 62 once and be capable of accepting a device operation through the remote controller 60 when the user wishes to perform a device operation on the television apparatus 100 in viewing a television program. Similarly, the television apparatus 100 is configured to display the remote controller image 70 corresponding to the operation of the DVD player 200 by pressing down the cross key 61 or the decision button 62 once also when the user wishes to perform a device operation on the DVD player 200 in viewing the video content recorded in the DVD.

According to this embodiment, the television apparatus 100 is configured to actually perform a device operation corresponding to the operation button image 75 when the user selects a prescribed operation button image 75 and presses down the decision button 62 in a device operation through the remote controller 60 and terminate display of the remote controller image 70 on the display portion 11 after a prescribed time period (fifteen seconds, for example) elapses. Therefore, the television apparatus 100 is configured to delete the remote controller image 70 from the display portion 11 after the completion of one device operation and the elapse of the prescribed time period. The television apparatus 100 is configured to store the content (operation content) of the most recently selected operation button image 75 in the memory portion 28 (see Fig. 2) in advance of execution of one device operation. Therefore, the television apparatus 100 is configured to be capable of preferentially accepting a new device operation on this operation button image 75 in a state where the cursor of the cross key 61 is arranged (blinks) at the position of the most recently selected operation button image 75 when display of the remote controller image 70 on the display portion 11 is newly started.

According to this embodiment, the television apparatus 100 is also configured as described below regarding a method for displaying the remote controller image 70 on the display portion 11.

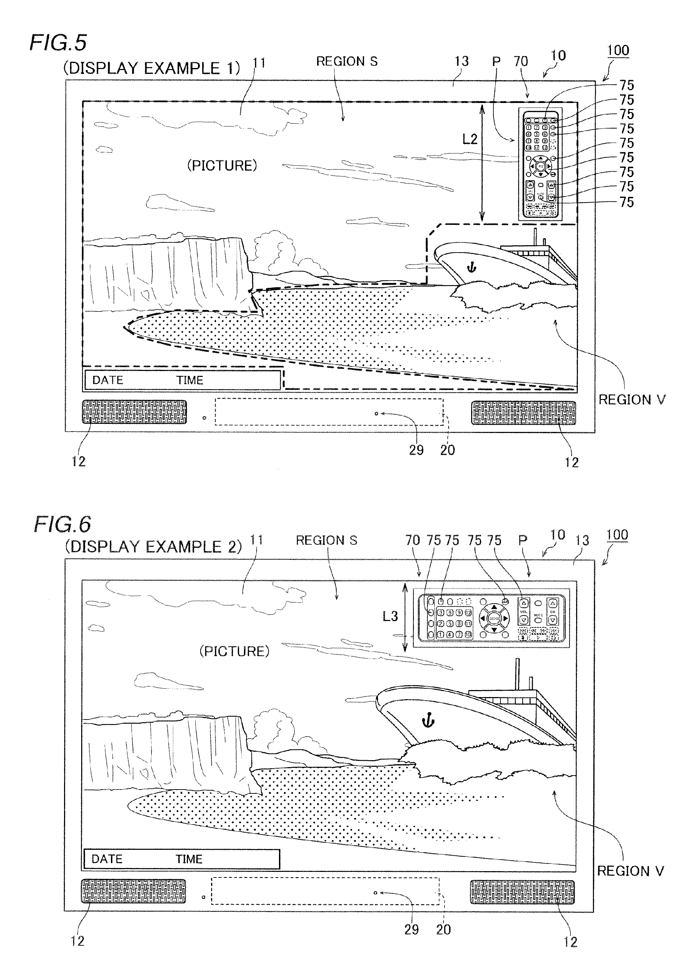

Specifically, the television apparatus 100 is configured to preferentially display the remote controller image 70 on a region S of the display portion 11 where the amount of picture motion is relatively small, as shown in Figs. 1 and 5, when the user presses down the cross key 61 or the decision button 62 of the remote controller 60 (see Fig. 1) in the state where only a picture is displayed on the display portion 11. In other words, the remote controller image 70 is not displayed on a region V where the amount of picture motion is relatively large.

More specifically, the control portion 27 determines which part is the region S where the colors of pixels of a picture image (picture data) currently displayed on the display portion 11 change relatively slightly when the remote controller image 70 is displayed. The television apparatus 100 is configured to perform control of displaying the remote controller image 70 on the region S where the amount of picture motion is small, specified by the control portion 27. In a picture image shown in Fig. 1, it is assumed that the amount of picture motion is relatively large in the region V where a wavy sea surface is displayed and the amount of picture motion is relatively small in the region S where a sand peach, a landform including a coastline, and sky are displayed. In this case, the remote controller image 70 is displayed in a state where the same is longitudinally arranged in the position P (around an upper right region in a screen) in the region S, for example. The display size (the display scale of the remote controller image 70) of the remote controller image 70 is so automatically adjusted that the remote controller image 70 falls within the longitudinal width L1 of the region S in the position P. Therefore, a part of the remote controller image 70 does not go beyond the region S into the region V. Thus, the remote controller image 70 is displayed only on the region S, and hence the remote controller image 70 is inhibited from intentionally interrupting a part (region V) where the amount of picture motion is large.

The television apparatus 100 is configured to continue to display the remote controller image 70 on the display portion 11 while causing the remote controller image 70 to follow the shape of the region S (where the amount of picture motion is relatively small) transitioning following transition of a picture also when the picture image changes (transitions) from moment to moment.

It is assumed that a ship sailing on the sea appears from the right edge of the screen in a state shown in Fig. 1, for example. In this case, the picture transitions to a state shown in Fig. 5. At this time, due to the appearance of the ship, a part recognized as the region S until then transitions to the region V where a picture motion become apparent. In other words, the width L1 of the region S in the position P in Fig. 1 transitions (reduces) to the width L2 (L1 > L2) of the region S in Fig. 5. In this case, the remote controller image 70 is changed (displayed in a contracted manner) from a display size displayed in Fig. 1 to a display size shown in Fig. 5 in the same position S. The remote controller image 70 displayed in Fig. 5 is displayed in a contracted manner within a viewable scale range. Thus, the remote controller image 70 is constantly displayed on the region S where the amount of picture motion is small no matter how a picture scene changes, and hence the user can view the picture without reducing viewing quality as much as possible. In addition, also during movement of the display position of the remote controller image 70 into the region S where the amount of picture motion is small, a state of selecting the operation button image 75 (see Fig. 3) with the cross key 61 (see Fig. 3) continues, and hence a device operation via the remote controller image 70 can be continuously performed without reducing viewing quality as much as possible even if the remote controller image 70 moves.

Furthermore, according to this embodiment, the display orientation of (a state of longitudinally or laterally displaying) the remote controller image 70 is changed such that the remote controller image 70 falls within this region S according to the shape of the aforementioned region S.

The picture may further transition from the state shown in Fig. 5 to a state shown in Fig. 6, for example. In other words, it is assumed that the ship appearing from the right edge of the screen in Fig. 5 gradually approaches frontward. Therefore, the range of the region V around the ship is increased, and the longitudinal width of the region S in the position P is further reduced from L2 to L3 (L2 > L3) When the control portion 27 determines that the remote controller image 70 cannot be displayed with high resolution since the scale (reduction rate) of the remote controller image 70 is too small in a state of longitudinally displaying the remote controller image 70 as shown in Fig. 5, the remote controller image 70 is displayed in a state (state of lateral display) where the display orientation thereof is changed by 90 degrees in the position P while the scale (reduction rate) thereof is adjusted, as shown in Fig. 6. Thus, the remote controller image 70 is visibly displayed according to the shape (width L3) of the region S in the position P without excessively reducing the size of the remote controller image 70. Furthermore, the orientations of the operation button images 75 in the remote controller image 70 are adjusted when the display orientation is changed. Thus, the operation button images 75 are displayed in a state of being vertically aligned even if the display direction (longitudinal and lateral directions) of the remote controller image 70 is changed.

The transition of display of the remote controller image 70 from Fig. 1 to Fig. 5 or the transition of display of the remote controller image 70 from Fig. 5 to Fig. 6 is only one example. In other words, the control portion 27 arbitrarily changes a display method (a size, an orientation, and a display position)) for the remote controller image 70 according to the transition state of the picture. For example, the remote controller image 70 may be displayed in a state of being longitudinally arranged at a left corner of the screen in Figs. 1, 5, and 6. In this manner, the television apparatus 100 is configured.

Second, the flow of control processing performed by the control portion 27 when the user operates the television apparatus 100 through the remote controller 60 according to this embodiment is described with reference to Figs. 1 to 3 and 5 to 7. As an example of the flow of control processing, the control operation of the apparatus body 10 in a case where the user performs a device operation through the remote controller 60 when viewing a picture such as a television program displayed on the display portion 11 is described below.

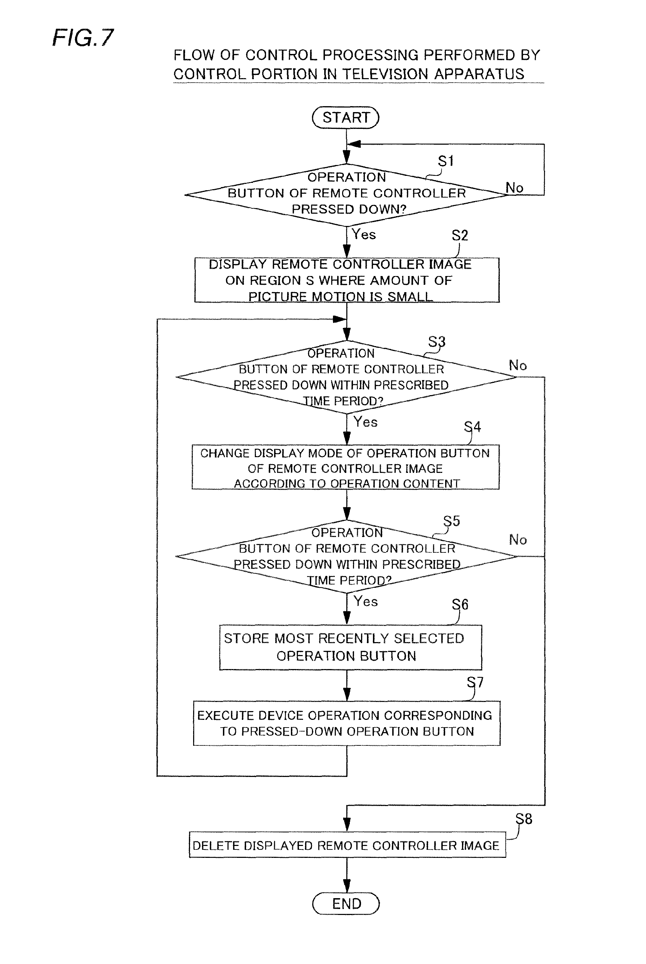

At a step S1, the control portion 27 (see Fig. 2) determines whether or not the user has pressed down the cross key 61 (see Fig. 2) or the decision button 62 (see Fig. 2) of the remote controller 60 (see Fig. 2), and this processing is repeated until the control portion 27 determines that the user has pressed down the cross key 61 or the decision button 62, as shown in Fig. 7. In other words, this determination is repeated until the operation signal receiving portion 29 (see Fig. 2) receives an operation signal (infrared signal) corresponding to the cross key 61 or the decision button 62 from the remote controller 60 (transmitting portion 63) in the apparatus body 10 (see Fig. 1).

When determining that the user has pressed down the cross key 61 or the decision button 62 of the remote controller 60 (the control portion 27 determines that the operation signal receiving portion 29 has received the operation signal corresponding to the cross key 61 or the decision button 62 from the transmitting portion 63) at the step S1, the control portion 27 performs control of displaying the remote controller image 70 (see Fig. 1) on the display portion 11 (see Fig. 1) at a step S2.

According to this embodiment, the control portion 27 determines which part is the region S (see Fig. 1) of the display portion 11 where the amount of picture motion is relatively small, and OSD display of the remote controller image 70 is performed on the region S where the amount of picture motion is relatively small, specified by the control portion 27. In other words, the remote controller image 70 is displayed on the region S where the colors of pixels change slightly (the amount of picture motion is small), avoiding the region V where the wavy sea surface is displayed, as shown in Fig. 1, for example.

At a step S3, the control portion 27 determines whether or not the user has pressed down the cross key 61 within a prescribed time period (fifteen seconds, for example). In other words, the control portion 27 determines whether or not the operation signal receiving portion 29 has received an operation signal corresponding to the cross key 61 from the remote controller 60 within the prescribed time period. When determining that the user has not pressed down the cross key 61 within the prescribed time period (the user has not performed a remote control operation) (in the case of "No" determination) at the step S3, the control portion 27 advances to a step S8. At the step S8, the control portion 27 performs control of deleting the displayed remote controller image 70 from the display portion 11 and terminates the control processing.

When determining that the user has pressed down the cross key 61 within the prescribed time period (the user has performed a remote control operation) (in the case of "Yes" determination) at the step S3, the control portion 27 performs control of changing the display mode of the remote controller image 70 so as to be linked to the operation content of the cross key 61 at a step S4. In other words, each time the user presses down any of the operation buttons 61a to 61d constituting the cross key 61, the currently selected operation button image 75 (image 72a of a volume up button) blinks in a color (bright red) different from the display color (gray) of the non-selected operation button images 75 in the remote controller image 70, as shown in Fig. 3.

At a step S5, the control portion 27 determines whether or not the user has pressed down the decision button 62 within a prescribed time period (fifteen seconds, for example). In other words, the control portion 27 determines whether or not the operation signal receiving portion 29 has received an operation signal corresponding to the decision button 62 from the remote controller 60 within the prescribed time period. When determining that the user has not pressed down the decision button 62 within the prescribed time period (the user has not performed a remote control operation) (in the case of "No" determination) at the step S5, the control portion 27 advances to the step S8. At the step S8, the control portion 27 performs control of deleting the displayed remote controller image 70 from the display portion 11 and terminates the control processing.

When determining that the user has pressed down the decision button 62 within the prescribed time period (the user has performed a remote control operation) (in the case of "Yes" determination) at the step S5, the control portion 27 stores the content (operation content) of the operation button image 75 most recently selected to press down the decision button 62 in the memory portion 28 (see Fig. 2) at a step S6. At a step S7, the control portion 27 performs control of executing a device operation corresponding to the operation content of the decision button 62 on the apparatus body 10. At this time, the display color of the executed operation button image 75 (the image 72a of a volume up button) is switched from the state of blinking in red to the state of lighting in blue in the remote controller image 70.

Thereafter, the control processing returns to the aforementioned step S3, and the same processing is repeated. Even if the aforementioned control processing (steps S1 to S8) is once terminated, the control portion 27 makes the determination at the step S1 constantly.

The aforementioned control at the step S2 is performed in parallel with other control steps in a state where the remote controller image 70 is displayed on the display portion 11. In other words, the remote controller image 70 is continuously displayed on the display portion 11 while the remote controller image 70 is caused to follow the shape of the region S (where the amount of picture motion is relatively small) transitioning following transition of the picture also when the picture image changes (transitions) from moment to moment in the state where the remote controller image 70 is displayed on the display portion 11. In this case, the remote controller image 70 may be displayed in the state where the same is longitudinally arranged as shown in Figs. 1 and 5 or in a state where the same is laterally arranged as shown in Fig. 6.

At the aforementioned step S6, the control portion 27 stores the content (operation content) of the operation button image 75 most recently selected to press down the decision button 62 in the memory portion 28. Therefore, when the control operation at the step S2 is performed, the remote controller image 70 reappears such that the stored operation button image 75 is displayed in display color (bright red) different from the display color (gray) of other operation button images 75 in a case where the content (operation content) of the operation button image 75 stored in the memory portion 28 by the previous remote control operation exists. The user restarts an operation while pressing down the cross key 61 (any of the operation buttons 61a to 61d), using this operation button image 75 displayed in red as a start point of a remote control operation.

The remote control operation on the television apparatus 100 in viewing a television program is used to illustrate the aforementioned control flow, but the same control is performed also when the operation target device is switched from the television apparatus 100 to the DVD player 200 through the remote controller 60, for example. However, a control target of the device operation at the step S7 is replaced by one with respect to the DVD player 200.

According to this embodiment, as hereinabove described, the television apparatus 100 is configured such that the apparatus body 10 is capable of accepting the device operation through the remote controller 60 via the remote controller image 70 and the number of (five) the operation buttons of the remote controller 60 is smaller than the number of the button images including the images 71 of buttons of the remote controller image 70. Thus, the user can perform various device operations on the television apparatus 100 through the remote controller 60 having fewer operation buttons than the number of the operation buttons of the remote controller image 70 displayed on the display portion 11. Thus, the operability of the remote controller 60 can be improved also when the user performs a device operation through the remote controller 60 via the remote controller image 70. Furthermore, the number of (five) the operation buttons is reduced, so that the remote controller 60 can be downsized while the structure of the remote controller 60 is simplified.

According to this embodiment, the remote controller 60 is constituted by the operation buttons 61a to 61d as the cross key 61 capable of moving a selection between the plurality of operation button images 75 in the remote controller image 70 to select one operation button image 75 and the decision button 62 deciding execution of the device operation corresponding to the selected operation button image 75. In addition, the television apparatus 100 is configured to accept the device operation through the remote controller 60 with the cross key 61 in which the operation buttons 61a to 61d are arranged in a cross shape and the decision button 62 arranged at the central portion of the cross key 61. Thus, the operation content of the remote controller 60 for performing a prescribed device operation can be limited to only two types of operations of moving a selection longitudinally and laterally with the cross key 61 (operation buttons 61a to 61d) to find a prescribed operation button image 75 in the remote controller image 70 and executing the actual device operation corresponding to the operation button image 75 selected with the decision button 62. Consequently, it is not necessary to perform operations other than the two types of operations, and hence the operability of the remote controller 60 can be significantly improved.

According to this embodiment, the operation buttons 61a to 61d are the cross key 61 capable of moving a selection between the plurality of operation button images 75 longitudinally and laterally in the remote controller image 70, and a device operation through the remote controller 60 is completed on the basis of pressing down of the decision button 62 with respect to the operation button image 75 selected with the cross key 61. Thus, an operation of finding a prescribed operation button image 75 in the remote controller image 70 with the cross key 61 is smoothly performed, and one device operation can be completed on the basis of pressing down of the decision button 62 with respect to the selected operation button image 75. In other words, one device operation is performed by a simple combination of the operation of the cross key 61 and an operation of pressing down the decision button 62, and hence the easy-to-use remote controller 60 for the user who is not used to a remote control operation can be provided.

According to this embodiment, the control portion 27 is configured to perform control of terminating display of the remote controller image 70 on the display portion 11 on the basis of that the decision button 62 has been pressed down. Thus, the remote controller image 70 is quickly deleted from the display portion 11 after the user presses down the decision button 62 to execute a prescribed device operation on the television apparatus 100, and hence the user can view the picture comfortably. Furthermore, the remote controller image 70 is deleted, so that the user can easily recognize that the prescribed device operation has been executed.

According to this embodiment, the control portion 27 is configured to perform control of terminating display of the remote controller image 70 on the display portion 11 after the user executes a device operation corresponding to the selected operation button image 75 by pressing down the decision button 62 and display of the remote controller image 70 on the display portion 11 continues for the prescribed time period (fifteen seconds). Thus, there is a high possibility that the user performs a device operation via the remote controller image 70 again immediately after pressing down the decision button 62, and hence the remote controller image 70 continues to be displayed on the display portion 11 for the prescribed time period (fifteen seconds) after the decision button 62 is pressed down, whereby the user can easily continue a device operation via the remote controller image 70 continuing to be displayed also when the user repeats a device operation via the remote controller image 70 once displayed.

According to this embodiment, the control portion 27 is configured to perform control of shifting to a state of displaying the remote controller image 70 on the display portion 11 and being capable of accepting a device operation through the remote controller 60 on the basis of that the cross key 61 (operation buttons 61a to 61d) or the decision button 62 of the remote controller 60 has been pressed down. Thus, the remote controller image 70 can be displayed on the display portion 11, effectively utilizing a limited number of the operation buttons of the cross key 61 and the decision button 62 when a device operation through the remote controller 60 is started. Furthermore, the user can easily accept that pressing down of the cross key 61 (operation buttons 61a to 61d) or the decision button 62 is a trigger operation for displaying the remote controller image 70 and replicate this later.

According to this embodiment, the control portion 27 is configured to store the most recently selected operation button image 75 in the remote controller image 70, and the control portion 27 is configured to perform control of displaying the remote controller image 70 on the display portion 11 such that a device operation on the most recently selected operation button image 75 can be preferentially accepted when the remote controller image 70 is displayed on the display portion 11 on the basis of that the cross key 61 (operation buttons 61a to 61d) of the remote controller 60 has been pressed down. Thus, there may be a high possibility that the user repeats a device operation on the operation button image 75 last used in the previous (most recent) device operation of the remote controller image 70 when the user performs a device operation again for some reason, and hence in this case, the device operation on the last selected operation button image 75 can be preferentially accepted, so that a device operation through the remote controller 60 via the remote controller image 70 can be promptly performed.

According to this embodiment, the control portion 27 is configured to perform control of displaying the remote controller image 70 on the region S of the display portion 11 where the amount of picture motion is relatively small, whereby the user can execute a device operation without interrupting picture viewing as much as possible when performing the device operation via the remote controller image 70.

According to this embodiment, the control portion 27 is configured to perform control of displaying the remote controller image 70 on the region S where the colors of pixels constituting the picture change relatively slightly. Thus, the remote controller image 70 can be easily displayed on the region S of the display portion 11 where the amount of picture motion is relatively small.

According to this embodiment, the control portion 27 is configured to perform control of moving the display position of the remote controller image 70 such that the remote controller image 70 is displayed in the region S of the display portion 11 where the amount of picture motion is relatively small, transitioning following the transition of the picture. Thus, the remote controller image 70 can be constantly displayed in a region where picture viewing is not interrupted as much as possible also when picture content transitions with time, and hence the user can perform a device operation while continuously maintaining comfortable picture-viewing.

According to this embodiment, the television apparatus 100 is configured such that a state of accepting a device operation through the remote controller 60 continues also during movement of the display position of the remote controller image 70 into the region S of the display portion 11 where the amount of picture motion is relatively small, transitioning following the transition of the picture. Thus, a state of accepting a device operation performed by the user continues even if the remote controller image 70 moves to any position in the display portion 11, and hence the content of the device operation through the remote controller 60 is not interrupted by the movement of the remote controller image 70. Therefore, the user can complete an intended device operation regardless of the movement of the display position of the remote controller image 70.

According to this embodiment, the control portion 27 is configured to perform control of turning the remote controller image 70 around, adjusting the scale of the remote controller image 70, and displaying the remote controller image 70 on the display portion 11 such that the remote controller image 70 falls within the region S of the display portion 11 where the amount of picture motion is relatively small according to the shape of the region S. Thus, display of the remote controller image 70 in a state where the remote controller image 70 goes beyond the region S of the display portion 11 where the amount of picture motion is relatively small into the region V where the amount of picture motion is relatively large can be easily suppressed, and hence a device operation can be executed without losing comfortable picture-viewing.

According to this embodiment, the television apparatus 100 is configured such that the operation button images 75 are displayed in a state where the vertical directions of the operation button images 75 are aligned with the vertical direction of the display portion 11, regardless of the display orientation of the remote controller image 70 turned around according to the shape of the region S of the display portion 11 where the amount of picture motion is relatively small. Thus, the operation button images 75 are displayed on the display portion 11 in a state where the vertical orientations of the operation button images 75 remain unchanged even if the display orientation of the remote controller image 70 is changed. Therefore, the user can accurately perform a device operation via the remote controller image 70 without causing an erroneous operation due to change in the orientation of the entire remote controller image 70 including the operation button images 75.

According to this embodiment, the control portion 27 is configured to perform control of turning the remote controller image 70 around and displaying the remote controller image 70 on the display portion 11 in addition to adjusting the scale of the remote controller image 70 such that the remote controller image 70 is displayed in a contracted manner within the viewable scale range when adjusting the scale of the remote controller image 70 and displaying the remote controller image 70 on the display portion 11. Thus, the remote controller image 70 can be displayed in a contracted manner within the viewable scale range in consideration of not only simple scale change but both scale change and display orientation change. Therefore, extremely small display of the remote controller image 70 including the operation button images 75 due to only scale change is avoided, and hence loss of operability with respect to the remote controller image 70 due to display of the remote controller image 70 in a contracted manner can be avoided.

According to this embodiment, the control portion 27 is configured to perform control of displaying the operation button images 75 available for device operations of the plurality of operation button images 75 included in the remote controller image 70 on the display portion 11 according to whether the operation target device is the television apparatus 100 or the DVD player 200 such that the user can operate the operation button images 75 with the cross key 61 and the decision button 62. Thus, the user can operate only the plurality of operation button images 75 available for device operations with the remote controller 60, and hence states where device operations unavailable for the television apparatus 100 or the DVD player 200 are performed can be easily eliminated.

According to this embodiment, the control portion 27 is configured to perform control of disabling acceptance of operations through the cross key 61 (operation buttons 61a to 61d) on the operation button images 76 or 77 unavailable for device operations of the plurality of operation button images 75 included in the remote controller image 70 according to whether the operation target device is the television apparatus 100 or the DVD player 200. Thus, operations on the operation button images 76 or 77 unavailable for device operations through the remote controller 60 can be reliably prevented, and hence the states where device operations unavailable for the television apparatus 100 or the DVD player 200 are performed can be reliably eliminated.

According to this embodiment, the control portion 27 is configured to perform control of displaying the remote controller image 70 corresponding to the external device on the display portion 11 when the external device such as the DVD player 200 is connected, and the television apparatus 100 is configured to be capable of accepting a device operation on the external device via the remote controller image 70 corresponding to the connected external device such as the DVD player 200 through the remote controller 60. Thus, a device operation on the external device such as the DVD player 200 connected to this television apparatus 100 can be performed with the remote controller 60 having a simplified structure. In other words, the common remote controller 60 can be employed for a plurality of operation target devices such as the television apparatus 100 and the DVD player 200, and hence the convenience of the user can be improved.

According to this embodiment, the television apparatus 100 is configured to store the reference image data to display the remote controller image 70 in the memory portion 28, and the remote controller image 70 corresponding to the DVD player 200 has such a display layout of the operation button images 75, etc. that the remote controller image 70 corresponding to the DVD player 200 is displayed on the display portion 11 on the basis of the reference image data stored in the memory portion 28. Thus, the remote controller image 70 according to the operation content of the DVD player 200 connected to the television apparatus 100 can be configured individually according to the type of the external device such as the DVD player 200, and hence dissimilarly to a case where the remote controller image 70 is configured by arranging a large number of the operation button images 75 common to all external devices and commonly used in all the external devices, the remote controller image 70 including the operation button images 75 can be configured in the display layout according to the external device such as the DVD player 200, so that the operability with respect to the remote controller image 70 can be improved.

The embodiment disclosed this time must be considered as illustrative in all points and not restrictive. The range of the present invention is shown not by the above description of the embodiment but by the scope of claims for patent, and all modifications within the meaning and range equivalent to the scope of claims for patent are further included.

For example, while the cross key 61 in the remote controller 60 is constituted by four separate operation buttons of the upward operation button 61a, the downward operation button 61b, the rightward operation button 61c, and the leftward operation button 61d in the aforementioned embodiment, the present invention is not restricted to this. According to the present invention, a cross key having operation buttons 61a to 61d integrally formed may alternatively be employed. In other words, the cross key may be configured to move a selection longitudinally and laterally by tilting the cross key in four directions of upward, downward, leftward, and rightward directions so as to select a prescribed operation button image 75. In this case, the cross key may be configured to concurrently serve to decide execution of a device operation corresponding to the selected operation button image 75 if the cross key is vertically pressed down. Thus, the number of the operation buttons can be further reduced, and hence the operability of the remote controller 60 can be further improved.

While the DVD player 200 is connected as the "external device" according to the present invention to the body apparatus 10 in the aforementioned embodiment, the present invention is not restricted to this. According to the present invention, a BD player, a DVD recorder, an HDD recorder, an STB (settop box), an AV amplifier, etc. other than the DVD player 200 may alternatively be connected to the television apparatus 100 individually or in parallel. Similarly to a case of operating the DVD player 200, the user can perform device operations on the external devices connected to the television apparatus 100 via remote controller images corresponding to the external devices with the remote controller according to the present invention.

While the present invention is applied to the television apparatus 100 in the aforementioned embodiment, the present invention is not restricted to this. According to the present invention, the remote controller according to the present invention is applicable also when a device operation on a PC (personal computer) device including a display portion displaying a picture is performed.

While only the operation button images 75 available for device operations corresponding to the operation target device of the plurality of operation button images 75 included in the remote controller image 70 are operable through the remote controller 60 according to whether the operation target device is the television apparatus 100 or the DVD player 200 when the DVD player 200 is externally connected to the television apparatus 100 in the aforementioned embodiment, the present invention is not restricted to this. According to the present invention, in a television apparatus added with a function of reproducing content recorded in a record medium, only operation button images 75 available for operating content may alternatively be operable in the remote controller image 70 according to a case where this television apparatus operates as an apparatus receiving a television program or a case where this television apparatus operates as an apparatus reproducing the content.

While the remote controller image 70 is displayed on the display portion 11 on the basis of that the operation buttons 61a to 61d or the decision button 62 of the remote controller 60 has been pressed down in the aforementioned embodiment, the present invention is not restricted to this. According to the present invention, an acceleration sensor, an inclination sensor, or the like may alternatively be provided in the remote controller 60, and the remote controller image 70 may alternatively be displayed on the display portion 11 when the user grasps and slightly shakes the remote controller 60 in a prescribed direction in the state where only a picture is displayed on the display portion 11.

While the control portion 27 is configured to perform control of moving the display position of the remote controller image 70 such that the remote controller image 70 is displayed in the region S of the display portion 11 where the amount of picture motion is relatively small, transitioning following the transition of the picture in the aforementioned embodiment, the present invention is not restricted to this. According to the present invention, the display mode of the remote controller image 70 may not be changed by following the transition of the picture even if the picture transitions while the user virtually operates the remote controller image 70 through the remote controller 60. When the display position, size, and orientation of the remote controller image 70 are frequently changed following the transition of the picture, the user focuses too much on the display mode of the remote controller image 70. Thus, a remote control operation via the remote controller image 70 through the remote controller 60 may become complicated. However, it is preferable to configure the control portion to perform control of changing the display mode of the remote controller image 70 constantly following the transition of the picture as in the aforementioned embodiment when the user places importance on reliable viewing of a moving picture (comfortable picture-viewing).

While the remote controller image 70 having a display layout capable of being commonly used in the remote controller image (see Fig. 3) having arrangement of the operation button images 75 in the case of operating the television apparatus 100 and the remote controller image (see Fig. 4) having arrangement of the operation button images 75 in the case of operating the DVD player 200 is displayed on the display portion 11 in the aforementioned embodiment, the present invention is not restricted to this. According to the present invention, each of a remote controller image having a display layout of the operation button images 75 configured to exclusively operate the television apparatus 100 and a remote controller image having a display layout of the operation button images 75 configured to exclusively operate the DVD player 200 may alternatively be displayed on the display portion 11. Also in this case, the remote controller 60 that the user actually holds in his/her hand to operate a button operation is configured such that the number of the operation buttons thereof is smaller than those of these simplified remote controller images.

While the control processing performed by the control portion 27 when the user operates the television apparatus 100 through the remote controller 60 is described by using the flowchart described in a flow-driven manner in which processing is performed in order along a processing flow for the convenience of illustration in the aforementioned embodiment, the present invention is not restricted to this. According to the present invention the control processing performed by the control portion 27 may alternatively be performed in an event-driven manner in which processing is performed on an event basis. In this case, the control processing performed by the control portion may be performed in a complete event-driven manner or in a combination of an event-driven manner and a flow-driven manner.

## Claims

1. A remote-controllable electronic apparatus(100) comprising:
a remote controller (60) including a first operation button (61, 62);
a display portion (11) displaying a picture; and
a control portion (27) performing control of displaying a remote controller image (70) including a plurality of second operation button images (75) operable with the first operation button on the display) portion,
the remote-controllable electronic apparatus configured to be capable of accepting a device operation through the remote controller via the remote controller image, and configured such that the first operation button of the remote controller is smaller in number than the second operation button images of the remote controller image.

2. The remote-controllable electronic apparatus according to claim 1, wherein
the first operation button of the remote controller is constituted by a selection button (61, 61a, 61b, 61c, 61d) capable of moving a selection between the plurality of second operation button images in the remote controller image to select the second operation button images individually and a decision button (62) deciding execution of a device operation corresponding to a selected second operation button image of the second operation button images.

3. The remote-controllable electronic apparatus according to claim 2, wherein
the selection button is a key capable of longitudinally and laterally moving the selection between the second operation button images in the remote controller image,
the remote-controllable electronic apparatus configured such that the device operation through the remote controller is completed, on the basis of pressing down of the decision button with respect to the second operation button image selected by the key.

4. The remote-controllable electronic apparatus according to claim 3, wherein
the key constituting the selection button is arranged in a cross shape.

5. The remote-controllable electronic apparatus according to claim 2, wherein
the control portion is configured to perform control of terminating display of the remote controller image on the display portion on the basis of that the decision button has been pressed down.

6. The remote-controllable electronic apparatus according to claim 5, wherein
the control portion is configured to perform control of terminating the display of the remote controller image on the display portion after the device operation corresponding to the selected second operation button image is executed by pressing down the decision button and the display of the remote controller image on the display portion continues for a prescribed time period.

7. The remote-controllable electronic apparatus according to claim 1, wherein
the control portion is configured to perform control of shifting to a state of displaying the remote controller image on the display portion and being capable of accepting the device operation through the remote controller on the basis of that the first operation button of the remote controller has been pressed down.

8. The remote-controllable electronic apparatus according to claim 7, configured to store a most recently selected second operation button image of the second operation button images in the remote controller image, wherein
the control portion is configured to perform control of displaying the remote controller image on the display portion such that a device operation on the most recently selected second operation button image can be preferentially accepted when the remote controller image is displayed on the display portion on the basis of that the first operation button of the remote controller has been pressed down.

9. The remote-controllable electronic apparatus according to claim 1, wherein
the control portion is configured to perform control of displaying the remote controller image on a region (S) of the display portion where an amount of picture motion is relatively small.

10. The remote-controllable electronic apparatus according to claim 9, wherein
the control portion is configured to perform control of displaying the remote controller image on a region where colors of pixels constituting the picture change relatively slightly.

11. The remote-controllable electronic apparatus according to claim 9, wherein
the control portion is configured to perform control of moving a display position of the remote controller image such that the remote controller image is displayed in the region of the display portion where the amount of picture motion is relatively small, transitioning following transition of the picture.

12. The remote-controllable electronic apparatus according to claim 9, wherein
the control portion is configured to perform control of turning the remote controller image around and displaying the remote controller image on the display portion such that the remote controller image falls within the region of the display portion where the amount of picture motion is relatively small according to a shape of the region.

13. The remote-controllable electronic apparatus according to claim 9, wherein
the control portion is configured to perform control of adjusting a scale of the remote controller image and displaying the remote controller image on the display portion such that the remote controller image falls within the region of the display portion where the amount of picture motion is relatively small according to a shape of the region.

14. The remote-controllable electronic apparatus according to claim 1, wherein
the control portion is configured to perform control of displaying a second operation button image available for a device operation of the plurality of second operation button images included in the remote controller image on the display portion according to operation content of the remote-controllable electronic apparatus such that the second operation button image is operable with the first operation button.

15. The remote-controllable electronic apparatus according to claim 1, configured to be connectable with an external device (200), wherein
the control portion is configured to perform control of displaying the remote controller image corresponding to the external device on the display portion when the external device is connected,
the remote-controllable electronic apparatus configured to be capable of accepting a device operation on the external device via the remote controller image corresponding to the connected external device through the remote controller.
